# EUROPEAN PATENT APPLICATION

(11) **EP 3 910 773 A1**
(43) Date of publication of application: **17.11.2021**
(21) Application number: 20174711.0
(22) Date of filing: 14.05.2020
(51) Int. Cl.: H02M 1/42, H02M 7/483, H02M 7/219, B60L 53/00, H02M 7/217, H02M 1/00

(54) **MULTI-LEVEL AC, ALTERNATING CURRENT, TO DC, DIRECT CURRENT, CONVERTER**

(71) Applicant: ABB Schweiz AG, 5400 Baden (CH)
(72) Inventor: Ma, Merlin-Lin, 2645 LM Delfgauw (NL); Tombelli, Fabio, 2612 AX Delft (NL); Raaijmakers, Stefan, 2613 WN Delft (NL)
(74) Representative: Maiwald Patent- und Rechtsanwaltsgesellschaft mbH

(57) **Abstract**

The invention relates to a multi-level AC, alternating current, to DC, direct current, converter (1), comprising an N level power factor converter, PFC, (2) having N PFC output terminals (5) with N being a natural uneven number ≥ 5, N-1 capacitors (C1, C2, C3, C4) connected in series with each capacitor (C1, C2, C3, C4) connected to two of the PFC output terminals (5), thereby forming an upper half of capacitors (C1, C2) and a lower half of capacitors (C3, C4), at least two switches (S7, S8), N-2 output terminals (DC OutPut_1, DC OutPut_2, DC OutPut_3), and a control device (3), whereby the second to (N-1)^{th} PFC output terminal (5) each form one of the N-2 output terminals (DC OutPut_1, DC OutPut_2, DC OutPut_3), the at least two switches (S7, S8) are connected in series between the first and N^{th} PFC output terminals (5) thereby forming a center tap (7) connected to the ((N+1)/2)^{th} output terminal (DC OutPut_2), and the control device (3) is configured for switching the at least two switches (S7, S8) such that an upper voltage of the upper half of the capacitors (C1, C2) equals a lower voltage of the lower half of the capacitors (C3, C4).

## Description

### Technical Field

The invention relates to a multi-level AC, alternating current, to DC, direct current, converter, comprising an N level power factor converter, PFC, having N PFC output terminals with N being a natural uneven number ≥ 5. The invention further relates to a method for converting AC, alternating current, to DC, direct current, comprising an N level power factor converter, PFC, having N PFC output terminals with N being a natural uneven number ≥ 5.

### Background Art

Electric vehicles have become very popular in many countries. Charging devices are being installed in public spaces such as parking lots or at private premises as charging infrastructure for charging said electric vehicles, EVs, with electrical energy. Said charging devices, often referred to as electric vehicle supply equipment, EVSE, are equipped with charging cables, which are plugged by means of a charging connector into a charging socket of the electric vehicle thereby forming a charging connection for the electrical energy. During a charging session with nowadays charging devices, currents of 500 A or more are applied onto the charging cable, charging connector and charging socket for enabling so called fast charging. Such fast charging often uses a Combined Charging System, CCS, protocol according to IEC 61851-23 and SAE J1772 standard for charging electric vehicles both in the US and in the European Union, EU. Other common charging protocols are CHAdeMO, GB or plain AC.

EVSEs are usually connected to an AC power grid for receiving AC energy, which is then converted by a converter of the EVSE to DC energy for charging the electric vehicle. The converter is nowadays often provided as a so-called multi-level AC/DC converter, for example as Vienna uni-directional 3-level converter. However, advantages of such multi-level AC/DC converters are not fully utilized with todays solutions. For example, two DC/DC converters connected to an output of the AC/DC converter cannot be connected to two electric vehicles individually, as an output power of the DC/DC converters must be same in order to keep an AC grid current balanced. Besides the two DC/DC converters have minimum voltage limitations. Moreover, although AC/DC converters are able to adopt the output DC voltage, AC/DC converters often have limited range, which stress the subsequent DC/DC converters a lot.

### Summary of invention

It is therefore an object of the invention to provide an improved multi-level AC, alternating current, to DC, direct current, converter, which overcomes before mentioned drawbacks.

The object of the invention is solved by the features of the independent claims. Modified embodiments are detailed in the dependent claims.

Thus, the object is solved by a multi-level AC, alternating current, to DC, direct current, converter, comprising
an N level power factor converter, PFC, having N PFC output terminals with N being a natural uneven number ≥ 5,
N-1 capacitors connected in series with each capacitor connected to two of the PFC output terminals, thereby forming an upper half of capacitors and a lower half of capacitors,
at least two switches, N-2 output terminals, and a control device, whereby
the second to (N-1)^{th} PFC output terminal each form one of the N-2 output terminals,
the at least two switches are connected in series between the first and N^{th} PFC output terminals thereby forming a center tap connected to the ((N+1)/2)^{th} output terminal, and
the control device is configured for switching the at least two switches such that an upper voltage of the upper half of the capacitors equals a lower voltage of the lower half of the capacitors.

Instead of traditional multi-level converters always keeping a DC bus voltage at the output terminals balanced, the proposed solution provides a wide DC bus voltage by keeping the upper voltage of the upper half of the capacitors equal to the lower voltage of the lower half of the capacitors. In particular, a power balancing leg formed by the at least two switches aims to keep an output balanced between the output terminals. Thus, the proposed solution allows for individually controlling the DC bus voltage of the output terminals, which could be different on different DC busses. Therefore, different DC/DC converters connected to the output terminals forming the DC busses can be supplied with different voltages, even between zero and the component rated voltage. Such way the DC/DC converters can be provided as fixed ratio converters, as an output voltage at the DC/DC converters can be con-trolled by control device. Furthermore, a semiconductor voltage of DC/DC converter can be half of the DC bus voltage, which could lower the cost. Lastly, the converter could connect to higher voltage AC grid with same semi-conductors and lower an input current, for reducing cable cost.

N, being a natural uneven number, may thus be 5, 7, 9 etc. For example, if using a seven-level PFC with the proposed power balancing leg said leg may comprise of four individual output terminals. The PFC circuit is generally used to shape an input current based on a rectified half sinusoid voltage sensed at an output of a bridge rectifier. The PFC circuit thus helps in maximizing an amount of real power drawn from an AC grid supplying the input current and to minimize harmonic stress caused by current harmonics on the AC grid.

Exemplary, the converter comprises two switches. The switches, also of the PFC and/or of the later described DC/DC converter, may comprise and/or can be provided as a thyristor, a gate turn-off thyristor, GTO, an insulated-gate bipolar transistor, IGBT, an integrated gate-commutated thyristor, IGCT, a field-effect transistor FET, a contactor, a relay, a switch, a pluggable contact and/or a plug, a mechanical switch, or any other possible switching means. The switches may comprise Si, SiC and/or GaN semiconductors.

The control device can be provided as a computer or any computerized means, such as a microcontroller. In respect to the switching the control device may comprise a voltmeter for measuring the upper voltage of the upper half of the capacitors and for measuring the lower voltage of the lower half of the capacitors. Depending on the measured voltage, the control device may actuate the at least two switches. According to an exemplary implementation the control device is configured for switching the switches with a pulse-width modulated switching pattern. The pulse-width modulated switching pattern may comprise a symmetrical pattern, for example not having a zero component.

In another exemplary implementation the N level PFC is provided cap-clamped, diode-clamped or H-bridge cascaded. According to a further exemplary implementation the converter comprises an inductor connected between the center tap and the ((N+1)/2)^{th} PFC output terminal.

In another exemplary implementation the converter comprises N-3 DC/DC converter, each DC/DC converter connected on a first side to two of the output terminals and configured for connecting on a second side via two DC output terminals to an electric vehicle. The DC/DC converter advantageously does not require a microcontroller or controller. The DC/DC converter is preferably provided as a fixed ratio high frequency transformer. In a further implementation a plurality of DC/DC converters can be provided, in particular connected in parallel and/or series, in order to realize an even more flexible output.

According to a further exemplary implementation the N level PFC comprises three AC input terminals configured for connecting to an AC grid. The AC grid may provide an input voltage of 400 V AC to the converter. While in prior art solutions a minimum DC output was for example 275 V DC, the proposed solution allows a flexible DC output voltage. Besides the AC grid may comprise an AC voltage of 3,3 kV or even higher.

The object is further solved by an electric vehicle supply equipment, EVSE, configured for connecting to an AC grid, comprising the multi-level AC to DC converter as described before for converting AC energy received from the AC grid to DC energy for charging an Electric vehicle with said DC energy.

The electric vehicle supply equipment, EVSE, also referred to as electric vehicle, EV, charging station, electric recharging point, charging point, charge point, charge post or electronic charging station, ECS. The EVSE is an element in an infrastructure that supplies electric energy for recharging of electric vehicles, including electric cars, neighbourhood electric vehicles and plug-in hybrids, via a charging cable and a charging connector to the EV. EVSEs usually comply with standards for electric vehicle fast charging, such as the so-called Combined Charging System, CCS, protocol according to IEC 61851-23 and SAE J1772 standard for charging electric vehicles both in the US and in the European Union, EU. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is con-trolled by the so called CharIN consortium. Besides other protocols such as, for example, CHAdeMO, as abbreviation of CHArge de Move, or GB/T, in particular according to 20234.3-2011 standard.

The proposed solution can be advantageously used with even higher charging currents such as or more than 500A, 600A or 3000A, voltages such as or higher 1000V, 1500V or 3000V and/or in combination with newer standards not yet defined requiring higher currents. The charging connector, the charging socket each and/or the charging current conductors are preferably designed to carry such currents and/or voltages. In contrast thereto, the auxiliary conductor can be provided as pin i.e. not designed to carry such currents and/or voltages as the charging current conductor, for example having a much smaller diameter than the charging current conductor.

The EVSE may comprise besides the converter preferably a transformer connected to the AC grid for receiving electrical energy, which is transformed and/or converted to DC for charging a battery of the electric vehicle connected via a DC bus to the EVSE. The electric vehicle can be provided as a motor car, a bus, a van, a truck, a tractor or any other electrically powered vehicle. The EVSE may comprise an outlet port connected to the DC bus, to which a charging cable is connected, for connecting to the Electric vehicle via the charging connector. The charging cable and/or the charging connector are preferably associated to charging standards, such as for instance CHAdeMO, CCS, GB, Tesla, etc., and/or are provided according to the standards described above. The EVSE may comprise a plurality of charging cables with respective charging connectors, for example each according to different charging standards. The charging connector is preferably provided as a plug, in particular as female plug, whereby the charging socket is preferably provided as a male socket, in particular arranged within a body of the Electric vehicle.

The object is even further solved by a use of the multi-level converter as described before for converting AC energy received from an AC grid to DC energy for charging an Electric vehicle with said DC energy.

The object is still further solved by a method for converting AC, alternating current, to DC, direct current, comprising
an N level power factor converter, PFC, having N PFC output terminals with N being a natural uneven number ≥ 5,
N-1 capacitors connected in series with each capacitor connected to two of the PFC output terminals, thereby forming an upper half of capacitors and a lower half of capacitors,
at least two switches and N-2 output terminals, whereby
the second to (N-1)^{th} PFC output terminal each form one of the N-2 output terminals, and
the at least two switches are connected in series between the first and N^{th} PFC output terminals thereby forming a center tap connected to the ((N+1)/2)^{th} output terminal, comprising the step of:
   switching the at least two switches such that an upper voltage of the upper half of the capacitors equals a lower voltage of the lower half of the capacitors.

The proposed method provides a flexible voltage on the output terminals, whereby the proposed switching scheme allows, by using an exemplary five-level PFC, individually charging two electric vehicles with DC current, thus significantly reducing overall system costs.

In an exemplary implementation the method comprises the step of: switching the switches with a pulse-width modulated switching pattern. According to a further exemplary implementation the N level PFC is provided cap-clamped, diode-clamped or H-bridge cascaded. In a further exemplary implementation the method comprises an inductor connected between the center tap and the ((N+1)/2)^{th} PFC output terminal.

According to a further exemplary implementation the method comprises N-3 DC/DC converter, each DC/DC converter connected on a first side to two of the output terminals and configured for connecting on a second side via two DC output terminals to an electric vehicle. In a further exemplary implementation the N level PFC comprises three AC input terminals configured for connecting to an AC grid.

According to a further exemplary implementation the method comprises an electric vehicle supply equipment, EVSE, configured for connecting to an AC grid, and comprising the step of:
Converting AC energy received from the AC grid to DC energy for charging an Electric vehicle with said DC energy with the method according to any of the previous method claims.

Further embodiments and advantages of the method are directly and unambiguously derived by the person skilled in the art from the converter as described before.

### Brief description of drawings

These and other aspects of the invention will be apparent from and elucidated with reference to the implementations described hereinafter.

In the drawings:
- Fig. 1: shows a multi-level AC, alternating current, to DC, direct current, three phase converter according to a preferred implementation as a circuit diagram,
- Fig. 2: shows in a more schematic view an implementation with the converter of Fig. 1 to which two DC/DC converters are connected, and
- Fig. 3: shows a less schematic view of the converter and the two DC/DC converters as shown in Fig. 2.

### Description of implementations

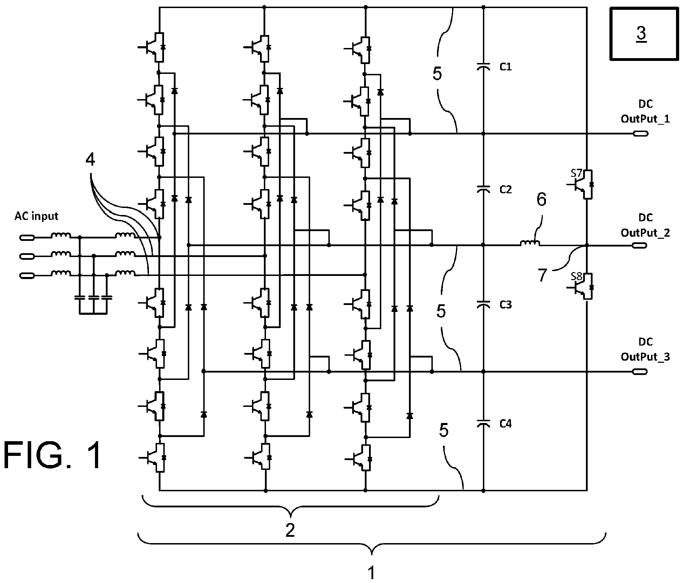

Fig. 1 shows a multi-level AC, alternating current, to DC, direct current, three phase converter 1 according to a preferred implementation as a circuit diagram. The converter 1 comprises a five-level power factor converter, PFC, 2, four capacitors C1, C2, C3, C4, two switches S7, S8, three output terminals DC OutPut_1, DC OutPut_2, DC OutPut_3, and a computerized control device 3.

The PFC 2 can be provided as cap-clamped, diode-clamped or H-bridge cascaded PFC 2 and comprises on its input side three AC input terminals 4, which are connected via inductances and star-connected capacitors to an AC grid, AC input. The PFC 2 further comprises five PFC output terminals 5. Each capacitor C1, C2, C3, C4 is connected between two of the PFC output terminals 5 such that all four capacitors C1, C2, C3, C4 are connected in series. Such wise the upper capacitors C1, C2 form an upper half of capacitors C1, C2, C3, C4 and the lower capacitors C3, C4 form a lower half of capacitors C1, C2, C3, C4.

The second PFC output terminal 5 from the top to the fourth PFC output terminal 5 from the top i.e. three PFC output terminals 5 each form one of the three output terminals DC OutPut_1, DC OutPut_2, DC OutPut_3. The converter 1 further comprises an inductor 6, which is connected in series between the third PFC output terminal 5 from the top and the middle output terminal DC OutPut_2. The first switch S7 is connected in series between the first PFC output terminal 5 from the top and the middle output terminal DC OutPut_2 and the second switch S8 is connected in series between the fifth PFC output terminal 5 from the top and said middle output terminal DC OutPut_2 so that the two switches S7, S8 are connected in series and thereby forming a center tap 7, to which the inductor 6 is also connected.

The control device 3 switches the two switches S7, S8 with a pulse-width modulated switching pattern such that an upper voltage of the upper half of the capacitors equals a lower voltage of the lower half of the capacitors. The control device 3 thereby provides power balancing for keeping an output voltage between the upper two output terminals DC OutPut_1, DC OutPut_2 and the lower two output terminals DC OutPut_2, DC OutPut_3 the same.

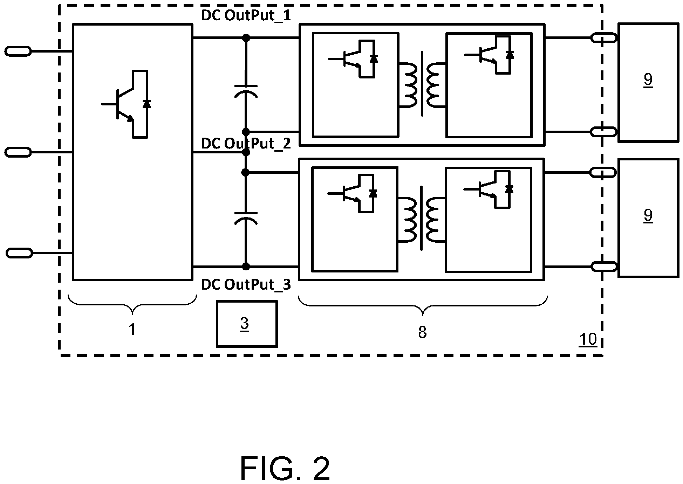

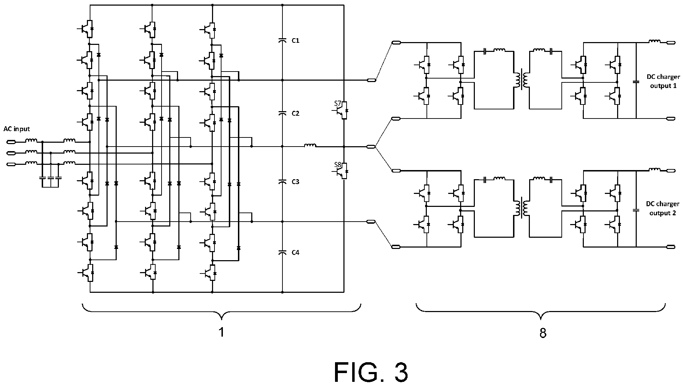

Fig. 2 shows in a more schematic view an implementation with the converter 1 as described before to which two DC/DC converters 8 are connected, whereas Fig. 3 shows a less schematic view of Fig. 2. Specifically, the upper DC/DC converter 8 is connected on a first side to the two upper output terminals DC OutPut_1, DC OutPut_2 and the lower DC/DC converter 8 is connected on the first side to the two lower output terminals DC OutPut_2, DC OutPut_3. On a second side of each DC/DC converter 8 each an electric vehicle 9 is connected to the respective DC/DC converter 8 via each two DC output terminals DC charger output 1, DC charger output 2. Such wise the charger 1 and the DC/DC converters 8 form an Electric vehicle supply equipment, EVSE, 10 for charging said electric vehicles 9 with DC energy converted by the converter 1.

While Figs. 1 to 3 show a five-level PFC 2, the converter 1 may also comprise a seven-level PFC 2, a nine-level FFC 2 etc. Generally, the converter may comprise an N level power factor converter, PFC, 2 with N PFC output terminals DC OutPut_1, DC OutPut_2, DC OutPut_3, whereby N is a natural uneven number ≥ 5. In such case N-1 capacitors C1, C2, C3, C4 are C1, C2, C3, C4 connected in series with each capacitor C1, C2, C3, C4 connected to two of the PFC output terminals 5, thereby also forming an upper half of capacitors C1, C2 and a lower half of capacitors C3, C4. Even for N level PFC 2 two or at least two switches S7, D8 are present and N-2 output terminals DC OutPut_1, DC OutPut_2, DC OutPut_3. As with the three-level PFC 2, for the N level PFC 2 the second to (N-1)^{th} PFC output terminal terminals 5 each form one of the N-2 output terminals DC OutPut_1, DC OutPut_2, DC OutPut_3, and the two or the at least two switches S7, S8 are connected in series between the first and N^{th} PFC output terminals 5 thereby forming the center tap 7 connected to the ((N+1)/2)^{th} output terminal 5.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

1 converter
2 N level power factor converter, PFC
3 control device
4 AC input terminal
5 PFC output terminal
6 inductor
7 center tap
8 DC/DC converter
9 electric vehicle
10 electric vehicle supply equipment, EVSE, (
AC input AC grid
DC OutPut_1, DC OutPut_2, DC OutPut_3 output terminal
DC charger output 1, DC charger output 2 DC output terminal

## Claims

1. A multi-level AC, alternating current, to DC, direct current, converter (1), comprising
an N level power factor converter, PFC, (2) having N PFC output terminals (5) with N being a natural uneven number ≥ 5,
N-1 capacitors (C1, C2, C3, C4) connected in series with each capacitor (C1, C2, C3, C4) connected to two of the PFC output terminals (5), thereby forming an upper half of capacitors (C1, C2) and a lower half of capacitors (C3, C4),
at least two switches (S7, S8), N-2 output terminals (DC OutPut_1, DC OutPut_2, DC OutPut_3), and a control device (3), whereby
the second to (N-1)^{th} PFC output terminal (5) each form one of the N-2 output terminals (DC OutPut_1, DC OutPut_2, DC OutPut_3),
the at least two switches (S7, S8) are connected in series between the first and N^{th} PFC output terminals (5) thereby forming a center tap (7) connected to the ((N+1)/2)^{th} output terminal (DC OutPut_2), and
the control device (3) is configured for switching the at least two switches (S7, S8) such that an upper voltage of the upper half of the capacitors (C1, C2) equals a lower voltage of the lower half of the capacitors (C3, C4).

2. The multi-level converter (1) according to the previous converter claim, whereby the control device (3) is configured for switching the switches (S7, S8) with a pulse-width modulated switching pattern.

3. The multi-level converter (1) according to any of the previous converter claims, whereby the N level PFC (2) is provided cap-clamped, diode-clamped or H-bridge cascaded.

4. The multi-level converter (1) according to any of the previous converter claims, comprising an inductor (6) connected between the center tap (7) and the ((N+1)/2)^{th} PFC output terminal (5).

5. The multi-level converter (1) according to any of the previous converter claims, comprising N-3 DC/DC converter (8), each DC/DC converter (8) connected on a first side to two of the output terminals (DC OutPut_1, DC OutPut_2, DC OutPut_3) and configured for connecting on a second side via two DC output terminals (DC charger output 1, DC charger output 2) to an electric vehicle (9).

6. The multi-level converter (1) according to any of the previous converter claims, whereby the N level PFC (2) comprises three AC input terminals (4) configured for connecting to an AC grid (AC input).

7. Electric vehicle supply equipment, EVSE, (10) configured for connecting to an AC grid (AC input), comprising the multi-level AC to DC converter (1) according to any of the previous claims for converting AC energy received from the AC grid (AC input) to DC energy for charging an electric vehicle (9) with said DC energy.

8. Use of the multi-level converter (1) according to any of the previous converter claims for converting AC energy received from an AC grid (AC input) to DC energy for charging an electric vehicle (9) with said DC energy.

9. A method for converting AC, alternating current, to DC, direct current, comprising
an N level power factor converter, PFC, (2) having N PFC output terminals (5) with N being a natural uneven number ≥ 5,
N-1 capacitors (C1, C2, C3, C4) connected in series with each capacitor (C1, C2, C3, C4) connected to two of the PFC output terminals (5), thereby forming an upper half of capacitors (C1, C2) and a lower half of capacitors (C3, C4),
at least two switches (S7, S8) and N-2 output terminals (DC OutPut_1, DC OutPut_2, DC OutPut_3), whereby
the second to (N-1)^{th} PFC output terminal (5) each form one of the N-2 output terminals (DC OutPut_1, DC OutPut_2, DC OutPut_3), and
the at least two switches (S7, S8) are connected in series between the first and N^{th} PFC output terminals (5) thereby forming a center tap (7) connected to the ((N+1)/2)^{th} output terminal (DC OutPut_2), comprising the step of:
switching the at least two switches (S7, S8) such that an upper voltage of the upper half of the capacitors (C1, C2) equals a lower voltage of the lower half of the capacitors (C3, C4).

10. The method according to the previous method claim, comprising the step of: switching the switches (S7, S8) with a pulse-width modulated switching pattern.

11. The method according to any of the previous method claims, whereby the N level PFC (2) is provided cap-clamped, diode-clamped or H-bridge cascaded.

12. The method according to any of the previous method claims, comprising an inductor (6) connected between the center tap (7) and the ((N+1)/2)^{th} PFC output terminal (5).

13. The method according to any of the previous method claims, comprising N-3 DC/DC converter (8), each DC/DC converter (8) connected on a first side to two of the output terminals (DC OutPut_1, DC OutPut_2, DC OutPut_3) and configured for connecting on a second side via two DC output terminals (DC charger output 1, DC charger output 2) to an electric vehicle (9).

14. The method according to any of the previous method claims, whereby the N level PFC (2) comprises three AC input terminals (4) configured for connecting to an AC grid (AC input).

15. The method according to any of the previous method claims, comprising an electric vehicle supply equipment, EVSE, (10) configured for connecting to an AC grid (AC input), and comprising the step of:
Converting AC energy received from the AC grid (AC input) to DC energy for charging an electric vehicle (9) with said DC energy with the method according to any of the previous method claims.
